# EUROPÄISCHE PATENTSCHRIFT

(11) **EP 0 475 295 B1**
(45) Veröffentlichungstag und Bekanntmachung des Hinweises auf die Patenterteilung: **05.01.1994**
(21) Anmeldenummer: 91115093.6
(22) Anmeldetag: 06.09.1991
(51) Int. Cl.: B65G 39/09

(54) **Transportrolle**
Transporting roll
Rouleau de transport

(30) Priorität: 12.09.1990 DE 4028970
(43) Veröffentlichungstag der Anmeldung: 18.03.1992
(73) Patentinhaber: Max Kettner Verpackungsmaschinenfabrik GmbH & Co. KG, 81737 München (DE)
(72) Erfinder: Baumann, Michael, Dipl.-Ing. (FH), W-8043 Unterföhring (DE)
(74) Vertreter: Schwabe - Sandmair - Marx

(56) Entgegenhaltungen:
- CH-A- 583 133
- DE-A- 2 205 242
- DE-A- 2 205 243
- DE-A- 2 400 701
- DE-A- 3 536 327
- DE-A- 3 616 840
- DE-B- 1 800 845

## Beschreibung

Die Erfindung betrifft eine Transportrolle nach dem Oberbegriff des Patentanspruchs 1.

Herkömmliche Transportrollen sind entweder als Friktionsrolle oder als Festrolle ausgebildet. Die Friktionsrolle kann so konstruiert sein, daß sie lediglich zur passiven Weiterleitung eines bewegten Gutes geeignet ist. Häufig ist die Friktionsrolle so ausgebildet, daß eine Kraftübertragung bis zu einem Maximalwert stattfinden kann. Wird dieser Maximalwert überschritten, so wird der Reibschluß zwischen einem Antriebsteil der herkömmlichen Transportrolle und der Transportrolle selbst überwunden, so daß keine Antriebskraft mehr übertragen wird.

Eine Rollenbahn, die solche Transportrollen aufweist, ist in der Regel auf den Transport bestimmter Güter über eine Transportstrecke mit bestimmten Neigungswinkeln, Kurvenstrecken etc. ausgebildet. So können z. B. Flaschenkästen aus Kunststoff, Faltkartons oder trays zu transportieren sein. Hierbei treten große Unterschiede in Bezug auf das Gewicht, die Reibungskoeffizienten und die Abmessungen der Güter auf.

Deshalb kann es im Extremfall vorkommen, daß bei der Montage einer solchen Rollenbahn eine große Anzahl von Friktionsrollen oder Festrollen vorhanden sein müssen, um die betreffende Rollenbahn an die jeweiligen Erfordernisse anzupassen, um Stausituationen oder zu große Abstände auf der Rollenbahn zu vermeiden. Auch bei der Umstellung von einem zu transportierenden Gut auf ein anderes zu transportierendes Gut kann es hier zu Situationen kommen, die eine Anpassung der verwendeten Transportrollen erfordert.

Bei Änderungen der Rollenbahn, wie sie oft in letzter Minute erforderlich sein können, ist es deshalb oft erforderlich, Festrollen und/oder Friktionsrollen nachzubestellen. Außerdem kann es erforderlich sein, eine Rollenbahn bei stark unterschiedlichen zu transportierenden Gütern mit einer entsprechenden Anzahl von Friktionsrollen bzw. Festrollen umzurüsten.

In der Regel hat der Anwender jedoch nur so viele Umrüsttransportrollen auf Lager, wie er maximal zu benötigen erwartet. Nicht selten sogar sind keine Umrüsttransportrollen beim Anwender vorhanden, um Kosten zu vermeiden.

Dieses kann häufig zu Fehlfunktionen auf der Rollenbahn führen, was sowohl zur Beschädigung der zu transportierenden Güter, als auch zur Beschädigung der Transportrollenbahn führen kann.

Eine teilweise Abhilfe brachten Transportrollen, die die Merkmale des Oberbegriffs des Anspruchs 1 aufweisen. Diese von der Firma Interoll, Wermelskirchen, Deutschland, bspw. in dem Katalog von 1988 vorbeschriebenen Transportrollen, die sich in ihre Einzelteile zerlegen lassen, können einerseits für den Friktionsbetrieb und andererseits als Festrolle verwendet werden, indem deren Führungskörper ausgetauscht werden. Es gibt demzufolge zwei unterschiedliche Führungskörper, so daß entweder eine Festrolle oder eine Staurolle bzw. Friktionsrolle entsteht. Bei einer Festrolle ist die Kupplung zwischen dem Antrieb für die Rollenbahn und dem betreffenden Rollenkörper starr bzw. wird durch Formschluß bewirkt.

Nachteilig ist jedoch auch hier, daß im Extremfall für jeden Rollenkörper zwei Sätze von Führungskörpern vorhanden sein müssen, damit diese je nach Bedarf zu den entsprechenden Transportrollen zusammengesetzt werden können. Auch hier ist nicht nur eine Vielzahl von Teilen notwendig, sondern auch eine entsprechende Lagerhaltung. Für den Fall, daß eine unvorhergesehene Anzahl von Führungskörpern benötigt wird, die erst beim Hersteller bestellt werden muß, kann sich die Montage stark verzögern. Ist die betreffende Rollenbahn beim Wechsel von einem zu transportierenden Gut auf ein anderes zu transportierendes Gut mit anderen Transportrollen umzurüsten, so kann es vorkommen, daß die Rollenbahn beim Anwender zunächst über eine längere Zeit nicht funktionsfähig, weil dieser die erforderlichen Führungskörper nicht auf Lager hat. Dadurch können beim Anwender in Stausituationen auf der Transportrollenbahn zu transportierende Güter von der Rollenbahn herabfallen und beschädigt oder sogar zerstört werden.

Es ist die Aufgabe der vorliegenden Erfindung, den Nachteilen des Standes der Technik abzuhelfen und insbesondere eine Transportrolle vorzuschlagen, die sowohl als starr angetriebene Festrolle als auch als reibschlüssige bzw. reibschlüssig angetriebene Friktionsrolle verwendet werden kann.

Diese Aufgabe wird durch die erfindungsgemäße Transportrolle mit den Merkmalen des Anspruchs 1 gelöst.

Zweckmäßige Ausgestaltungformen sind durch die Merkmale in den Unteransprüchen definiert.

Da der Rollenkörper zwei unterschiedliche Aufnahmeteile für Führungskörper aufweist, wobei das eine Aufnahmeteil für den Formschluß mit einem Antriebs-Führungskörper und das andere Aufnahmeteil für den Reibschluß mit dem gleichen Antriebs-Führungskörper ausgebildet ist, während ein anderer passiver Führungskörper in dem jeweils freien Aufnahmeteil aufgenommen wird, ist es möglich, den Rollenkörper um 180 ° zu drehen, mit den jeweiligen Führungskörpern zusammenzustecken und ihn auf diese Weise entweder als eine Friktionsrolle oder als eine Festrolle zu verwenden. Das an das jeweils andere Ende des Rollenkörpers angesetzte Führungsteil, das zur Lagerung des Rollenkörpers dient, hat keine Antriebsfunktion.

Die erfindungsgemäße Rolle läßt sich also durch einen Handgriff von einer starr angetriebenen Transportrolle (Festrolle) zu einer vollständig oder bedingt passiven Friktionsrolle umwandeln. Damit ist es möglich, jede mit der erfindungsgemäßen Transportrolle bestückte Rollenbahn universell an entsprechende, zu transportierende Güter bzw. räumliche Randbedingungen beim Anwender anzupassen. Eine Lagerhaltung für zwei verschiedene Führungskörper, mit denen eine Transportrolle für die beiden denkbaren Anwendungsmöglichkeiten umgebaut werden kann, ist nicht mehr nötig, da jede Transportrolle bereits in der Grundausstattung alle erforderlichen Teile aufweist.

Der Anwender einer mit der erfindungsgemäßen Transportrolle versehenen Rollenbahn muß eine Fehlfunktion seiner Rollenbahn nicht mehr tolerieren, weil er z. B. die momentan benötigte Anzahl an Führungskörpern zur Umfunktion einiger Transportrollen nicht auf Lager hat, da er jede erfindungsgemäße Transportrolle wahlweise als Friktionsrolle oder als Festrolle montieren kann.

Bei dem einen Aufnahmeteil, das als Friktionsteil ausgebildet ist, handelt es sich vorzugsweise um einen Kunststoffeinsatz, der den Antriebs-Führungskörper reibschlüssig aufnehmen kann.

Das Führungsteil des Rollenkörpers, das für die Aufnahme des Antriebs-Führungskörpers beim Einsatz als Festrolle ausgebildet ist, ist mit einem Profil versehen, z. B. einer Zahnung oder dergleichen, das mit einem entsprechenden Profil des Antriebs-Führungskörpers in Eingriff treten kann.

Beide Aufnahmeteile können einen passiv wirkenden Führungskörper aufnehmen, der lediglich zur Führung bzw. Lagerung der Transportrolle geeignet ist, dem also keinerlei Antriebsfunktionen zukommt.

Die durch den Rollenkörper hindurchgehende Achse paßt in entsprechende Aufnahmebohrungen bzw. Aufnahmelöcher in den beiden Führungskörpern.

Der Antriebs-Führungskörper kann z. B. einstückig mit einem Ritzel ausgebildet sein oder mit einem Ritzel zusammengesteckt oder zusammengeschraubt werden.

Die Achse bzw. der oder die Führungskörper sind mit Führungsflächen versehen, mit denen die erfindungsgemäße Transportrolle in der Rollenbahn gehalten und geführt werden kann.

Im folgenden wird die erfidnungsgemäße Transportrolle unter Bezugnahme auf die beigefügten Figuren näher erläutert. Dabei werden weitere Vorteile und Merkmale der erfindungsgemäßen Transportrolle offenbart. Es zeigen:
- Figur 1: eine bevorzugte Ausführungsform der erfindungsgemäßen Transportrolle in einer Explosionsdarstellung in einem teilweisen Schnittdarstellung;
- Figur 2: die Transportrolle nach Figur 1, jedoch mit um 180 ° gewendetem Rollenkörper.

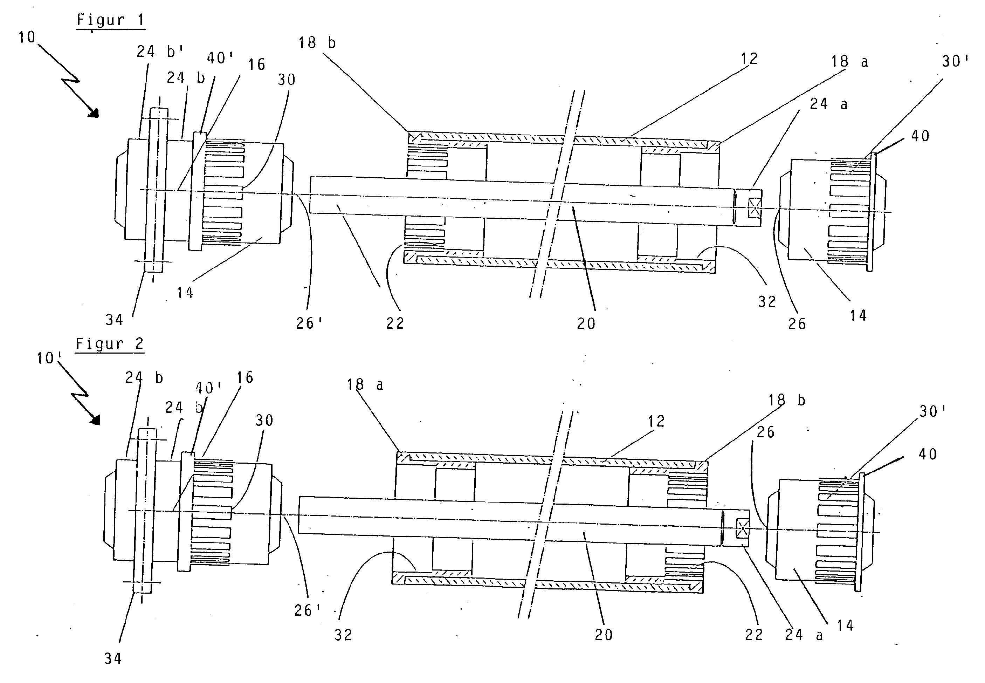

In Figur 1 ist die erfindungsgemäße Transportrolle, die sich in ihre Einzelteile zerlegen läßt, allgemein durch das Bezugszeichen 10 gekennzeichnet.

Zu der Transportrolle 10 gehört ein zylindrischer Rollenkörper 12, in dessen Enden zwei Führungsteile in Form von Kunststoffeinsätzen 18 a, 18 b angeordnet, z. B. eingeklebt oder eingeschraubt sind. Die Einsätze 18 a, 18 b können selbstverständlich auch aus Metall sein. Das Führungsteil bzw. der Einsatz 18 a ist lediglich mit glatten Innenflächen 32 versehen. Dadurch können Führungskörper 14, 16 reibschlüssig in dem Aufnahmeteil 18 a gehalten werden. Die Führungskörper 14, 16 sind durch eine Achse 20 miteinander verbunden, die koaxial durch den Rollenkörper 12 verläuft.

Die Reibschlüssigkeit kann so gewählt sein, daß die erfindungsgemäße Transportrolle lediglich passiv wirkt. Die Reibschlüssigkeit kann jedoch auch so verwirklicht sein, daß Kräfte bis zu einem gewissen Maximalwert übertragen werden können, bevor der Reibschluß aufgehoben wird und damit keine Antriebskraft mehr auf die entsprechende Transportrolle übertragen wird.

Der Führungskörper 14 wird lediglich passiv zur Führung des Rollenkörpers 12 eingesetzt. Der Führungskörper 16, der, wie auch der Führungskörper 14, reversibel in die Aufnahmeteile 18 a, 18 b im Walzenkörper 12 eingesetzt ist, ist zum Antrieb der Transportrolle 10 ausgebildet.

Der für den Antrieb vorgesehene Führungskörper 16 ist mit einem Profil 30 versehen, das in ein komplementär ausgebildetes Profil 22 innerhalb des Aufnahmeteils 18 b formschlüssig eingreifen kann. Der Führungskörper 16 ist außerdem mit einem Ritzel 34 zum Eingriff mit einem Kettenantrieb versehen, der hier nicht dargestellt ist. Auch andere Vorrichtungen 34 zur Kraftübertragung sind hier möglich. Die Achse 20 bzw. die Führungskörper 14, 16 können mit Führungsflächen 24 a, 24 b, 24 b' versehen sein, an denen die zusammengefügte erfindungsgemäße Transportrolle in einer Lagerung in einer Transportrollenbahn eingesetzt und geführt wird. In beiden Aufnahmeteilen 18 a, 18 b kann auch der passive Führungskörper 14 aufgenommen werden.

Die Darstellung nach Figur 1 zeigt die erfindungemäße Transportrolle 10 bzw. 10' in iherer Konfiguration als Festrolle, die angetrieben wird.

In Figur 2 ist die erfindungsgemäße Transportrolle allgemein durch das Bezugszeichen 10' gekennzeichnet. Die für Figur 1 beschriebenen Teile sind in Figur 2 durch die gleichen Bezugszeichen gekennzeichnet.

In Figur 2 ist der Rollenkörper 12 mit den Aufnahmeteilen 18 a, 18 b um 180 ° um seine Längsachse gedreht. In dieser Lage wirkt das Aufnahmeteil 18 a mit dem Führungskörper 16 und das Aufnahmeteil 18 b mit dem Führungskörper 14 zusammen. Der Führungskörper 16 steht mit den Innenwandungen 32 des Aufnahmeteils 18 a lediglich im Reibschluß und kann auf diese Weise keine Antriebskraft oder nur eine Antriebskraft bis zu einem bestimmten Maximalbetrag auf den Rollenkörper 12 und somit auf die erfindungsgemäße Transportrolle 10' übertragen.

Der passive Führungskörper 14 tritt zwar in Eingriff mit dem Profil 22 an dem Innenumfang des Aufnahmeteils 18 b, kann aber in Ermangelung irgendwelcher Antriebsübertragungsvorrichtungen dem Einsatz der erfindungsgemäßen Transportrolle als Friktionsrolle nicht hinderlich entgegenwirken.

Die Anschläge 40, 40' dienen als stirnseitige Anlagenflächen für den Rollenkörper 12 bzw. die Aufnahmeteile 18 a, 18 b.

Die Profile 30, 30', bzw. 22 werden in der Regel als Zahnungen ausgebildet sein. Es ist jedoch ohne weiteres denkbar, z. B. die Teile der Führungskörper 16, 14, die in die Aufnahmeteile 18 a, 18 b hineinragen, z. b. partiell oval auszubilden, wodurch auch form- bzw. reibschlüssige Verbindungen herstellbar sind.

Die Ausführungsbeispiele 10, 10 ' sind durch eine einfache Drehung des Rollenkörpers mit den fest montierten Aufnahmeteilen 18 a, 18 b um 180 ° zu den Führungskörpern 14, 16 realisierbar. Es liegt auf der Hand, daß bei der erfindungsgemäßen Transportrolle nicht die Notwendigkeit besteht, jeweils Sätze von Führungskörpern 14, 16 vorzusehen, die entweder für die Funktion der Transportrolle als angetriebene Festrolle oder als nicht oder nur bedingt angetriebene Friktionsrolle ausgebildet sind.

Sollte also beim Anwender eine Rollenbahn mit den erfindungsgemäßen Transportrollen 10, 10' nicht zufriedenstellend funktionieren, weil sich die zu transportierenden Gebinde anders verhalten, z. B. weil sie, statt wie geplant aus Karton aus Kunststoff oder Holz sind, so können überflüssige Friktionsrollen 10' kurzerhand durch eine Drehung des Rollenkörpers 12 um 180 ° in eine starr angetriebene Festrolle 10 umgewandelt werden. Die umgekehrte Vorgehensweise ist selbstverständlich genauso schnell und einfach möglich.

Entsprechend kann verfahren werden, wenn ein von der Montageplanung abweichender Aufbau der betreffenden Rollenbahn erforderlich wird.

Die verwendeten Teile können sowohl aus Metall als auch aus Kunststoff hergestellt sein. Auch eine gemischte Zusammensetzung aus verschiedenen Materialien ist ohne weiteres denkbar. So kann ein Führungskörper 14, 16 z. B. in der Aufnahmebohrung 26, 26' für die Achse 20 mit Metall ausgekleidet sein.

## Patentansprüche

1. Transportrolle mit einem zylindrischen Rollenkörper, mit einer Achse, die den Rollenkörper koaxial durchläuft, und mit zwei Führungskörpern, wobei der eine Führungskörper zum Antrieb dient und der andere passiv ist, die den Rollenkörper an der Achse halten, **dadurch** **gekennzeichnet**, daß der Rollenkörper (12) an seinen beiden Enden Aufnahmeteile (18a, 18b) aufweist, die koaxial in dem Rollenkörper (12) angeordnet und zur Aufnahme der Führungskörper (14, 16) ausgebildet sind, und daß eines der Aufnahmeteile (18a, 18b) für den passiven oder reibschlüssigen Eingriff und das andere für den formschlüssigen Eingriff mit dem angetriebenen Führungskörper (14, 16) ausgebildet ist, während der andere passive Führungskörper in das jeweils freie Aufnahmeteil (18a, 18b) aufgenommen ist.

2. Transportrolle nach Anspruch 1, **dadurch gekennzeichnet**, daß die Transportrolle (10, 10') durch eine Drehung des Rollenkörpers (12) mit den Aufnahmeteilen (18 a, 18 b) um 180 ° von einer angetriebenen Festrolle (10) in eine passive Friktionsrolle (10') umwandelbar ist.

3. Transportrolle nach einem der Ansprüche 1 oder 2, **dadurch gekennzeichnet**, daß mindestens einer der Führungskörper (14, 16) mit einer Vorrichtung (34) zur Übertragung einer Antriebskraft versehen ist.

4. Transportrolle nach einem der Ansprüche 1 bis 3, **dadurch gekennzeichnet**, daß mindestens einer der Führungskörper (14, 16) mit einem Profil (30, 30') versehen ist, das in ein komplementär ausgebildetes Profil an einem der Aufnahmeteile (18 b) formschlüssig paßt.

5. Transportrolle nach einem der Ansprüche 1 bis 4, **dadurch gekennzeichnet**, daß eines der Aufnahmeteile (18 a) mit einem derartigen Innenumfang (32) versehen ist, daß keine oder begrenzte Kraftübertragung auf die Transportrolle (10') zustandekommt.

6. Transportrolle nach einem der Ansprüche 1 bis 5, **dadurch gekennzeichnet**, daß die Aufnahmeteile (18 a, 18 b) in den Rollenkörper (12) eingeklebt oder eingeschraubt sind.

## Claims

1. Conveyor roller comprising a cylindrical roller body having a shaft passing coaxially through the roller body, and two guide bodies, the one guide body serving for the drive and the other being passive, which hold the roller body on the shaft, characterized in that the roller body (12) comprises at its two ends receiving members (18a, 18b) which are arranged coaxially in the roller body (12) and configured for receiving the guide bodies (14, 16), and that one of the receiving members (18a, 18b) is configured for the passive or frictional engagement and the other for the form-locking engagement with the driven guide body (14, 16) whilst the other passive guide body is received in the respective free receiving member (18a, 18b).

2. Conveyor roller according to claim 1, characterized in that the conveyor roller (10, 10') can be converted from a driven fixed roller (10) to a passive friction roller (10') by turning the roller body (12) with the receiving members (18a, 18b) through 180°.

3. Conveyor roller according to any one of claims 1 or 2, characterized in that at least one of the guide bodies (14, 16) is provided with a means (34) for transmitting a drive force.

4. Conveyor roller according to any one of claims 1 to 3, characterized in that at least one of the guide bodies (14, 16) is provided with a profile (30, 30') which fits in form-locking manner into a complementarily configured profile on one of the receiving members (18b).

5. Conveyor roller according to any one of claims 1 to 4, characterized in that one of the receiving members (18a) is provided with an inner periphery (32) such that no force transmission or limited force transmission to the conveyor roller (10') occurs.

6. Conveyor roller according to any one of claims 1 to 5, characterized in that the receiving members (18a, 18b) are adhesively secured or screwed into the roller body (12).

## Revendications

1. Galet de roulement qui possède un corps de galet cylindrique, un axe qui traverse coaxialement le corps de galet et deux corps de guidage, un corps de guidage servant à l'entraînement et l'autre étant passif, lesquels corps de guidage maintiennent le corps de galet sur l'axe, caractérisé en ce que le corps de galet (12) présente à ses deux extrémités des pièces de réception (18a, 18b) qui sont disposées coaxialement dans le corps de galet (12) et sont configurées pour loger le corps de guidage (14, 16), et qu'une des pièces de réception (18a, 18b) est configurée pour l'engagement passif ou par friction et l'autre pour l'engagement positif avec le corps de guidage entraîné (14, 16), tandis que l'autre corps de guidage passif est logé dans la pièce de réception (18a, 18b) respectivement libre.

2. Galet de roulement suivant la revendication 1, caractérisé en ce que le galet de roulement (10, 10') peut être transformé à partir d'un galet fixe entraîné (10) en un galet de friction (10') passif par une rotation à 180° du corps de galet (12) avec les pièces de réception (18a, 18b).

3. Galet de roulement suivant une des revendications 1 ou 2, caractérisé en ce qu'au moins un des corps de guidage (14, 16) est muni d'un dispositif (34) pour la transmission d'une force motrice.

4. Galet de roulement suivant une des revendications 1 à 3, caractérisé en ce qu'au moins un des corps de guidage (14, 16) est muni d'un profil (30, 30') qui s'adapte par engagement positif dans un profil configuré de façon complémentaire dans une des pièces de réception (18b).

5. Galet de roulement suivant une des revendications 1 à 4, caractérisé en ce qu'une des pièces de réception (18 a) est munie d'un périmètre intérieur (32) tel que la force motrice ne peut se faire ou est réalisée de façon limitée sur le galet de roulement (10').

6. Galet de roulement suivant une des revendications 1 à 5, caractérisé en ce que les pièces de réception (18 a, 18 b) sont collées ou vissées dans le corps de galet (12).
